# EUROPÄISCHE PATENTANMELDUNG

(11) **EP 1 151 943 A1**
(43) Veröffentlichungstag der Anmeldung: **07.11.2001**
(21) Anmeldenummer: 01106778.2
(22) Anmeldetag: 17.03.2001
(51) Int. Cl.: B65G 19/26, B65G 43/08

(54) **Vorrichtung zum Querfördern von Werkstücken**

(30) Priorität: 26.04.2000 DE 20007570 U
(71) Anmelder: HANS KALTENBACH MASCHINENFABRIK GmbH & Co. KG, 79539 Lörrach (DE)
(72) Erfinder: Schönfeld, Jürgen, 79539 Lörrach (DE); Stoffel, Martin, 79639 Grenzach-Wyhlen (DE); Strobel, Gerhard, 79618 Rheinfelden (DE)
(74) Vertreter: Maucher, Wolfgang, Dipl.-Ing.

(57) **Zusammenfassung**

Eine Vorrichtung (1) hat zum Querfördern von langgestreckten und/oder flächigen Werkstücken (2) auf einer Lagerfläche (3) wenigstens eine insbesondere endlos umlaufend angetriebene Schleppkette (4). Diese hat zumindest einen nach einer Seite abschwenkbaren oder versenkbaren und in Gegenrichtung hochstellbaren Mitnehmeranschlag (7), der eine Mitnehmerklaue oder einen vergleichbaren Vorsprung zum Hintergreifen eines der Förderrichtung abgewandten Bereiches des Werkstückes (2) aufweist. Die Schleppkette (4) ist dabei auch entgegen der Förderrichtung antreibbar, wobei der Mitnehmeranschlag (7) dann unter die Unterseite des Werkstückes (2) verschwenkt werden kann. Dabei kann dieses Verschwenken durch das Anlaufen des Mitnehmeranschlags (7) an das Werkstück (2) bewirkt werden. Die Vorrichtung (1) weist einen Sensor (10) auf, der die Auslenkbewegung des Mitnehmeranschlages (7) beim Verschieben entgegen der Förderrichtung unter dem Werkstück (2) hindurch detektiert. Dieser Sensor (10) ist mit der Steuerung (11) des Antriebes (5) der Schleppkette (4) derart verbunden, daß dieser Antrieb (5) stillsetzbar und/oder in entgegengesetzter Richtung oder in Förderrichtung antreibbar ist, so daß der Quertransport eines Werkstücks (2) von der Aufmerksamkeit einer Bedienungsperson weitestgehend unabhängig ist.

## Beschreibung

Die Erfindung betrifft eine Vorrichtung zum Querfördern von langgestreckten und/oder flächigen Werkstücken auf einer Lagerfläche, also zum Fördern quer zu einer Längserstreckung oder Ausdehnung des Werkstückes, mit wenigstens einer insbesondere endlos umlaufend angetriebenen Schleppkette, die zumindest einen nach einer Seite abschwenkbaren und in Gegenrichtung hochstellbaren Mitnehmeranschlag, eine Mitnehmerklaue oder dergleichen Vorsprung zum Hintergreifen eines der Förderrichtung abgewandten Bereiches des Werkstückes aufweist, wobei die Schleppkette auch entgegen der Förderrichtung antreibbar und dabei der Mitnehmeranschlag unter die Unterseite des Werkstückes verschwenkbar ist, insbesondere durch sein Anlaufen an dieses Werkstück.

Derartige Vorrichtungen sind bekannt und dienen beispielsweise dazu, in einem Materiallager nebeneinander angeordnete, insbesondere langgestreckte Werkstücke oder Profile nacheinander in Querrichtung, also quer zu ihrer Längserstreckungsrichtung, aus der Lagerposition auf einen Rollenförderer oder dergleichen zu verschieben, um sie dann beispielsweise in ihrer Längserstreckungsrichtung weiterzutransportieren oder einer Bearbeitung zuzuführen.

Dabei ist es erforderlich, daß eine Bedienungsperson die Schleppkette zunächst entgegen ihrer Förderrichtung in Gang setzt, bis der Mitnehmeranschlag das Werkstück unterfahren oder unterlaufen hat, wobei er selbsttätig ausweicht und sich dann hinter dem Werkstück wieder selbsttätig hochstellt und das Werkstück hintergreift. Dies muß von der Bedienungsperson beobachtet werden, damit sie erkennen kann, wann die Schleppkette und insbesondere der oder ein Mitnehmeranschlag in einer Position sind, in welcher ein beispielsweise in Förderrichtung vorderstes Werkstück durch erneute Umkehr der Antriebsrichtung der Schleppkette aus diesem Materiallager abtransportiert werden kann.

In gleicher Weise können auch innerhalb von Fertigungsstraßen befindliche Querförderer für solche Werkstücke mit entsprechenden Schleppketten ausgestattet sein, das heißt die die Werkstücke aufnehmenden Lagerflächen könnten auch im Anschluß an eine erste Bearbeitung und vor dem Weitertransport zu einer weiteren Bearbeitung vorhanden sein.

Bei diesen Vorrichtungen ist also wenigstens eine Bedienungsperson und deren Aufmerksamkeit erforderlich, die die Schleppkette in dem Augenblick anhalten muß, in welchem der Mitnehmer relativ zu dem abzutransportierenden Werkstück die passende Position einnimmt, zumindest immer dann, wenn die genaue Lage des Werkstückes nicht definiert ist.

Der Erfindung liegt deshalb die Aufgabe zugrunde, eine Vorrichtung der eingangs genannten Art zu schaffen, bei welcher der Quertransport eines Werkstückes von der Aufmerksamkeit einer Bedienungsperson unabhängig ist.

Zur Lösung dieser Aufgabe ist die eingangs definierte Vorrichtung dadurch gekennzeichnet, daß sie einen Sensor aufweist, der die Auslenkbewegung des Mitnehmeranschlages beim Verschieben entgegen der Förderrichtung unter dem Werkstück hindurch detektiert, und daß der Sensor mit der Steuerung des Antriebes der Schleppkette derart verbunden ist, daß dieser stillsetzbar und/oder in entgegengesetzter Richtung oder in Förderrichtung antreibbar ist.

Auf diese Weise kann der Vorgang des Unterfahrens eines Werkstückes mit einem Mitnehmeranschlag automatisiert werden, da der Sensor einerseits die Absenkung des Mitnehmers, die durch sein Anlaufen an das Werkstück eingeleitet und durchgeführt wird, und andererseits die selbsttätige Rückverschwenkung oder Rückverstellung in die Obenstellung erkennt. Gleichzeitig ist sichergestellt, daß dieser Vorgang der Steuerung in dem schon erwähnten Sinne mitgeteilt wird, daß die Schleppkette angehalten und/oder in entgegengesetzter Richtung, nämlich in Förderrichtung wieder angetrieben wird, wenn der Mitnehmeranschlag zunächst unter dem Werkstück hindurchbewegt wurde und sich dahinter wieder in seine für eine Förderung des Werkstückes geeignete Position hochgestellt hat. Es kann also entweder mit Hilfe des Sensors die Ausgangslage für einen Querförder-Vorgang automatisch, also ohne eine Bedienungsperson eingenommen und dann bei Bedarf eine Querförderung veranlaßt werden oder es kann automatisch auch gleich die Querförderung durchgeführt werden, was durch die Steuerung vorgewählt oder vorgegeben sein kann.

Zweckmäßig ist es dabei, wenn der oder die Mitnehmeranschläge gegen eine Rückstellkraft oder Rückstellfeder schwenkbar an der Schleppkette gelagert ist/sind und auf der der Schwenkrichtung abgewandten Seite eine Schräge zum Anlaufen gegen das Werkstück und zum selbsttätigen Niederdrücken beim Unterlaufen des Werkstückes hat/haben. Der Mitnehmeranschlag kann also gegen eine Rückstellkraft oder Rückstellfeder niedergedrückt werden, wobei eine an ihm vorgesehene Anlaufschräge für eine selbsttätige derartige Abwärtsbewegung des Mitnehmeranschlages sorgt, der aufgrund der Rückstellkraft dann nach dem Unterlaufen des Werkstückes automatisch wieder in Obenstellung bewegt wird, so daß er nun das Werkstück in Förderrichtung hintergreift und bei einer Umkehr der Antriebsrichtung der Schleppkette dann das Werkstück in Querförderrichtung mitnimmt.

Der Sensor kann wenigstens eine Lichtschranke sein, die insbesondere in Förderrichtung unter dem in Förderposition hochstehenden Mitnehmeranschlag hindurch und in dem Schwenkweg des Mitnehmeranschlages oder eines an diesem vorgesehenen Vorsprunges bei dessen Verschwenkung nach unten angeordnet ist. Durch das Absenken des Mitnehmeranschlages wird also eine Lichtschranke unterbrochen und durch das automatische Zurückverschwenken des Mitnehmeranschlages in seine Obenstellung wird der Lichtstrahl wieder freigegeben, so daß diese Vorgänge in an sich bekannter Weise zum Steuern des Antriebes der Schleppkette benutzt werden können.

Eine alternative Anordnung kann darin bestehen, daß der Sensor ein mechanischer Kontakt ist, der durch das Verschwenken des Mitnehmeranschlages oder eines mit diesem verbundenen Vorsprunges betätigbar ist. Wird der Kontakt beim Niederdrücken des Anschlages geschlossen und nach dem Unterfahren des Werkstückes durch das selbsttätige Zurückverschwenken des Mitnehmeranschlages wieder unterbrochen, können diese Vorgänge ebenfalls in bekannter Weise zur Betätigung einer Steuerung dienen.

Eine weitere Ausgestaltung der Erfindung von eigener schutzwürdiger Bedeutung kann darin bestehen, daß die Schleppkette mit einer Wegmeßeinrichtung verbunden ist, mit welcher der Weg der Schleppkette und/oder des Mitnehmeranschlages erfaßbar ist, der bis zum Hochschwenken des Mitnehmeranschlages beim Hintergreifen eines Werkstückes zurückgelegt wird. Dadurch kann beispielsweise in einem Lager für solche Werkstücke gleichzeitig erfaßt werden, ob und welche Plätze für Werkstücke bereits freigegeben sind. Je größer der Weg ist, den die Schleppkette und ein Mitnehmeanschlag zurücklegen muß, um durch ein Werkstück niedergedrückt zu werden, um so mehr Werkstücke sind bereits abtransportiert.

Die Wegmeßeinrichtung oder ihr Wegmesser können mit einer Steuerung und/oder mit einem Speicher verbunden sein und somit kann die jeweilige Position eines Werkstückes vor, während und/oder nach seinem Abtransport erfaßbar und speicherbar sein. Es kann also beispielsweise automatisch erfaßt weden, ob und wo sich noch Werkstücke in dem Werkstücklager beziehungsweise auf der Lagerfläche befinden, so daß auch ein Nachfüllen eines derartigen Werkstücklagers automatisiert werden kann.

Insgesamt ergibt sich eine Vorrichtung, mit der Stabmaterial, Platten oder sonstige insbesondere langgestreckte Werkstücke vor oder nach einer Bearbeitung in Querrichtung befördert werden können. Dabei ist eine hohe Packungsdichte möglich und der Vorgang des Abtransportes und der Querförderung kann praktisch ohne Bedienungsperson erfolgen. Die dazu an einer oder mehreren Schleppketten vorgesehenen Mitnehmeranschläge oder Klauen können das jeweilige Werkstück erfassen und hintergreifen und dann in Querrichtung transportieren. Um nach dem Rücklauf das nächste Werkstück erfassen zu können, sind die Mitnehmeranschläge oder Klauen absenkbar, was auf einfache Weise durch einseitige Anlaufschrägen und federnde Schwenklagerungen erzielt wird, wobei aber das Absenken der Klauen auch durch nicht näher erläuterte Hebevorrichtungen zum Heben und Senken solcher Klauen oder Mitnehmeranschläge erfolgen könnte. Die federnde Lagerung der durch das Werkstück und eine Anlaufschräge selbsttätig niedergedrückten Mitnehmeranschläge hat den Vorteil, daß die Lage des Werkstückes und seine Abmessung in Querrichtung beliebig sein können und immer dazu führen, eine entsprechende Absenkung des Mitnehmeranschlages zu bewirken.

Dabei ist weiterhin vorteilhaft, daß durch die vorbeschriebene Vorrichtung insbesondere bei Kombination einzelner oder mehrerer der erläuterten Merkmale und Maßnahmen ermöglicht wird festzustellen, ob das Lager mit Werkstücken belegt ist, welche Position die Werkstücke einnehmen und sie an definierte Stellen des Lagers zu transportieren. Dazu wird die Bewegung des Mitnehmeranschlages in Verbindung zweckmäßigerweise mit einer Positionsmessung für diesen Anschlag über den Antrieb der Kette ausgewertet. Durch das Niederdrücken des Mitnehmeranschlages wird der parallel zur Kettenbahn verlaufende Lichtstrahl, gegebenenfalls ein Laserstrahl, unterbrochen, wodurch ein Signal ausgelöst wird, das die aktuelle Position des Mitnehmeranschlages als Positin der vorderen Kante des Werkstückes kennzeichnet. Dadurch wird ermöglicht, den Mitnehmeranschlag so weit entgegen der Förderrichtung zurückzubewegen, bis ein erstes Werkstück, dessen genaue Lage zunächst unbekannt ist, erkannt - Mitnehmeranschlag unten - und erfaßt - Mitnehmeranschlag wieder oben - ist. Beim Abtransport oder Quertransport durch den Mitnehmeranschlag kann wiederum die Weginformation des Meßsystems dazu benutzt werden, das Werkstück an eine andere definierte Stelle im Lager zu schleppen.

Ferner ermöglicht die erfindungsgemäße Vorrichtung es, durch ein vollständiges Unterfahren der Lagerfläche eine Abtastung der aufliegenden Werkstücke durchzuführen, um beispielsweise die Anzahl von Stäben oder Profilen zu ermitteln oder die Belegung bestimmter Bereiche des Lagers zu prüfen. Dabei ist vorteilhaft, daß zu einer solchen Abtastung der ohnehin vorhandene Mitnehmeranschlag verwendet werden kann.

Nachstehend ist ein Ausführungsbeispiel der Erfindung anhand der Zeichnung näher beschrieben. Es zeigt in schematisierter Darstellung:

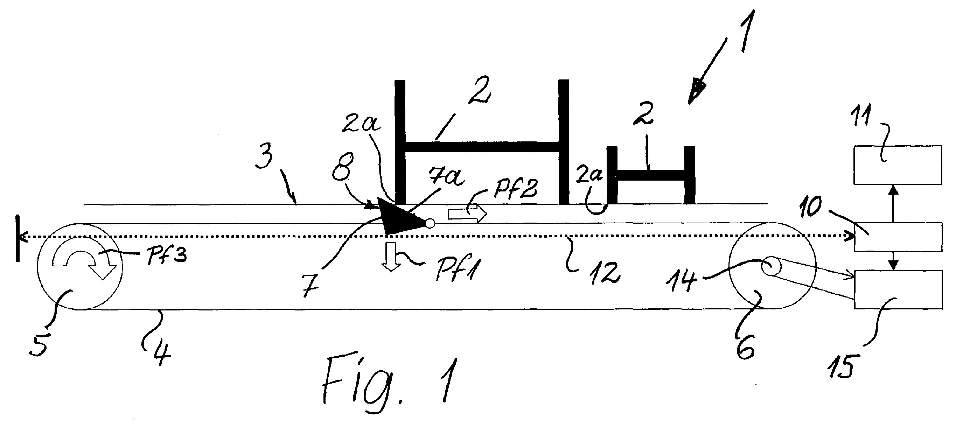

- Fig.1: eine Seitenansicht einer erfindungsgemäßen Vorrichtung mit einer Schleppkette und einem Mitnehmeranschlag der sich mit einer Anlaufschräge gerade im Bereich einer Kante eines Werkstückes und auf dem Weg unter dieses Werkstück befindet, wobei ein Licht- oder Laserstrahl einer Lichtschranke gerade noch nicht unterbrochen ist, sowie

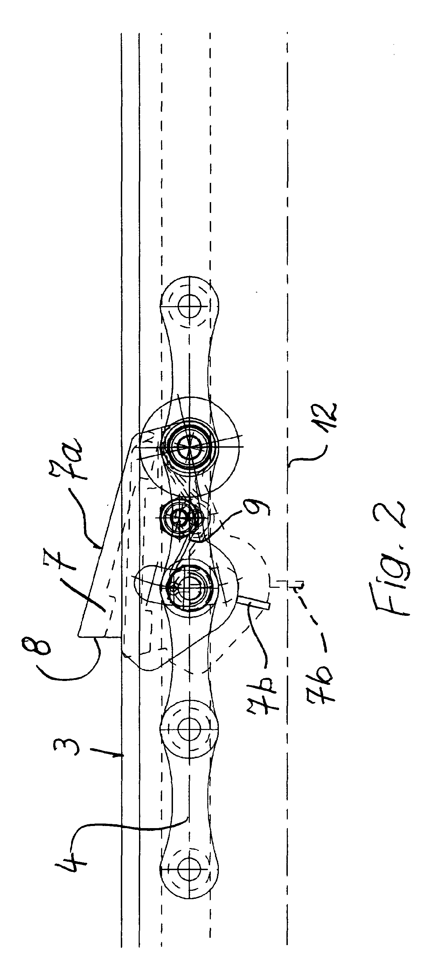

- Fig.2: in vergrößertem Maßstab einen an einer Schleppkette schwenkbar gegen eine Rückstellfeder gelagerten Mitnehmeranschlag in vergrößertem Maßstab, wobei dieser Mitnehmeranschlag einen abwärtsgerichteten Vorsprung hat, der beim Niederdrücken des Mitnehmeranschlages den Licht- oder Laserstrahl der Lichtschranke unterbricht.

Eine im ganzen mit 1 bezeichnete Vorrichtung dient zum Querfördern von langgestreckten, gegebenenfalls auch flächigen Werkstücken 2, im Ausführungsbeispiel unterschiedlich groß bemessenen Doppel-T-Trägern auf einer Lagerfläche 3, die beispielsweise zu einem Lager für solche Profile oder Werkstücke 2 gehört.

Ein wesentlicher Teil dieser Vorrichtung 1 ist eine endlos umlaufend angetriebene Schleppkette 4, die einerseits an einem Antrieb 5 und andererseits an einem Umlenkrad 6 jeweils um 180° umgelenkt wird.

An dieser Schleppkette 4 erkennt man sowohl in Fig.1 als auch deutlicher und in größerem Maßstab in Fig.2 einen nach einer Seite, nämlich in Richtung des Pfeiles Pf1 nach unten abschwenkbaren und in entgegengesetzter Gegenrichtung wieder hochstellbaren Mitnehmeranschlag 7, der dabei gemäß Fig.2 die Form einer Klaue oder Klinke haben kann und zum Hintergreifen eines der Förderrichtung abgewandten Bereiches des Werkstückes 2 dient. Vor allem in Fig.2 erkennt man deutlich an diesem Mitnehmeranschlag 7 eine Anschlagfläche 8, die nach dem Verschieben des Mitnehmeranschlages 7 in Richtung des Pfeiles Pf2 (vgl.Fig.1) mit einem der Stege dieses Werkstückes 2 in Berührung gelangt und bei einer dem Pfeil Pf2 entgegengesetzten Bewegung der Schleppkette 4 dann das entsprechend erfaßte Werkstück 2 mitnimmt und also quer zu seiner Längserstreckungsrichtung auf der Lagerfläche 3 bewegt und fördert. Die Schleppkette 4 ist also nicht nur in Förderrichtung, sondern gemäß dem Pfeil Pf3 auch entgegen der Förderrichtung antreibbar, das heißt ihr Antrieb 5 kann in und entgegen der Förderrichtung wirksam sein.

Der Mitnehmeranschlag 7 ist unter die Unterseite und dabei zunächst unter die vordere Kante 2a des Werkstückes 2 verschwenkbar, wobei Fig.1 den Vorgang des Abwärtsverschwenkens gerade in einem Zwischenstadium zeigt. Der Mitnehmeranschlag 7 ist bereits teilweise in Richtung des Pfeiles Pf1 verschwenkt, jedoch wird bei einer weiteren Bewegung der Schleppkette 4 in Richtung des Pfeiles Pf2 aufgrund einer Anlaufschräge 7a, die die Kante 2a des Werkstückes 2 berührt, der Mitnehmeranschlag 7 noch etwas weiter abwärtsbewegt. In diesem Ausführungsbeispiel erfolgt also die Verschwenkund des Mitnehmeranschlages 7 durch das Anlaufen gegen das Werkstück 2 und dessen dabei zuerst berührte untere Kante 2a.

Der Mitnehmeranschlag 7 ist dabei gegen eine Rückstellkraft, im Ausführungsbeispiel gemäß Fig.2 gegen eine Rückstellfeder 9 nach unten verschwenkbar an der Schleppkette 4, bevorzugt an der Verbindung von zwei benachbarten Kettengliedern miteinander gelagert. Dabei erkennt man auf der der Schwenkrichtung abgewandten Seite die schon erwähnte Anlaufschräge 7a zum Anlaufen gegen das Werkstück 2 und zum selbsttätigen Niederdrücken beim Unterlaufen des Werkstückes 2. Die Anlaufschräge 7a endet dabei an ihrer höchsten Stelle mit der abwärtsgerichteten Anschlagfläche 8.

Die Vorrichtung 1 weist einen Sensor 10 auf, der die Auslenkbewegung des Mitnehmeranschlages 7 beim Verschieben entgegen der Förderrichtung unter dem Werkstück 2 hindurch detektiert, wobei dieser Sensor 10 mit einer Steuerung 11 der Vorrichtung und insbesondere des Antriebes 5 der Schleppkette 4 derart verbunden ist, daß dieser stillsetzbar und/oder in entgegengesetzter Richtung, also in Förderrichtung, antreibbar ist. Somit kann der gesamte Vorgang des Querförderns, sei es zum Abtransport, sei es zum Einnehmen einer neuen Lage innerhalb des Lagers, sei es zum Nachfüllen, automatisiert und von Bedienungspersonen unabhängig oder weitgehend unabhängig gemacht werden.

Der Sensor 10 ist im Ausführungsbeispiel als Lichtschranke ausgebildet, deren Laser- oder Lichtstrahl 12 in Förderrichtung beziehungsweise in Erstreckungsrichtung der Schleppkette 4 unter dem in Förderposition hochstehenden Mitnehmeranschlag 7 hindurch und in den Schwenkweg dieses Mitnehmeranschlages 7 oder eines an diesem vorgesehenen Vorsprunges 7b bei dessen Verschwenkung nach unten angeordnet ist. Der Lichtstrahl 12 wird also unterbrochen, wenn der Mitnehmeranschlag 7 beispielsweise durch die Werkstückkante 2a und die Anlaufschräge 7a abwärtsverschwenkt wird und dann eine Position erreicht hat, in welcher er das Werkstück 2 unterfahren kann. Somit wird automatisch detektiert, wenn sich der Mitnehmeranschlag 7 gerade unter der in Förderrichtung vorderen Werkstückkante 2a befindet.

Ist das Werkstück oder ein Bereich des Werkstückes 2 unterfahren und der Mitnehmeranschlag 7 kann wieder hochgestellt werden, hört die Unterbrechung des Lichtstrahles 12 auf, was von dem Sensor 10 entsprechend erfaßt und der Steuerung 11 mitgeteilt wird.

In gleicher Weise könnte der Sensor 10 auch ein mechanischer Kontakt sein beziehungsweise mit einer Kontaktleiste zusammenwirken, wobei ein derartiger Kontakt durch das Verschwenken des Mitnehmeranschlages 7 oder des mit diesem verbundenen Vorsprunges 7b geschlossen werden könnte, so daß eine analoge Detektion des Verschwenkens des Mitnehmeranschlages 7 zunächst nach unten und dann wieder nach oben ermöglicht wird.

In Fig.1 ist noch schematisiert angedeutet, daß die Schleppkette 4 zum Beispiel über die Achse 14 des Umlenkrades 6 mit einer Wegmeßeinrichtung 15 verbunden sein kann, mit welcher der Weg der Schleppkette 4 und/oder des Mitnehmeranschlages 7 erfaßt werden kann, der beispielsweise vom Niederdrücken bis zum Hochschwenken des Mitnehmeranschlages 7 beim Hintergreifen des Werkstückes 2 zurückgelegt wird. Darüber hinaus kann auch detektiert werden, wo sich der Mitnehmeranschlag 7 jeweils in Relation zur Lagerfläche 3 bzw. zur gesamten Vorrichtung 1 und somit auch zu auf der Lagerfläche 3 liegenden Werkstücken 2 befindet. Dabei ist auch diese Wegmeßeinrichtung 15 mit der Steuerung 11 und gegebenenfalls zusätzlich mit dem Sensor 10 verbunden, so daß die jeweilige Position des Werkstückes 2 vor, während und/oder nach seinem Abtransport erfaßt und auch gespeichert werden kann. Dadurch wird es möglich, die mit der Wegmeßeinrichtung 15 verbundene Steuerung 11 mit dem Antrieb 5 der Schleppkette 4 derart zu verbinden, daß eim Nachfüllen der Lagerfläche 3 mit Werkstücken 2 diese jeweils bis auf einen Abstand zu dem ihnen gegenüber in Förderrichtung letzten Werkstück zuführbar sind, so daß dann zwischen den einzelnen gelagerten Werkstücken ein auch in Fig.1 angedeuteter Abstand eingehalten wird und vorgegeben ist, in welchen der Mitnehmeranschlag 7 jeweils paßt, um ein Werkstück 2 abtransportieren zu können, ohne mit dem benachbarten Werkstück 2 dabei zu kollidieren oder von einem solchen benachbarten Werkstück 2 an seinem Rückverschwenken in die Obenstellung gehindert zu werden.

Da also ein Werkstück nach dem anderen praktisch automatisch durch einen Mitnehmeranschlag zunächst unterfahren und dann bei Umkehr der Antriebsrichtung des Antriebes 5 abtransportiert werden kann, ohne daß eine Bedienungsperson dies beobachten und veranlassen muß, ergibt sich eine preiswerte und schnell arbeitende Vorrichtung 1, die zusätzliche Möglichkeiten des Speicherns und des rechtzeitigen Nachfüllens des Lagers hat, wenn gleichzeitig die Wegmeßeinrichtung 15 mit entsprechenden Steuerungen und Speichern versehen und verbunden ist.

Die Vorrichtung 1 hat zum Querfördern von langgestreckten und/oder flächigen Werkstücken 2 auf einer Lagerfläche 3 wenigstens eine insbesondere endlos umlaufend angetriebene Schleppkette 4. Diese hat zumindest einen nach einer Seite abschwenkbaren oder versenkbaren und in Gegenrichtung hochstellbaren Mitnehmeranschlag 7, der eine Mitnehmerklaue oder einen vergleichbaren Vorsprung zum Hintergreifen eines der Förderrichtung abgewandten Bereiches des Werkstückes 2 aufweist. Die Schleppkette 4 ist dabei auch entgegen der Förderrichtung antreibbar, wobei der Mitnehmeranschlag 7 dann unter die Unterseite des Werkstückes 2 verschwenkt werden kann. Dabei kann dieses Verschwenken durch das Anlaufen des Mitnehmeranschlags 7 an das Werkstück 2 bewirkt werden. Die Vorrichtung 1 weist einen Sensor 10 auf, der die Auslenkbewegung des Mitnehmeranschlages 7 beim Verschieben entgegen der Förderrichtung unter dem Werkstück 2 hindurch detektiert. Dieser Sensor 10 ist mit der Steuerung 11 des Antriebes 5 der Schleppkette 4 derart verbunden, daß dieser Antrieb 5 stillsetzbar und/oder in entgegengesetzter Richtung oder in Förderrichtung antreibbar ist, so daß der Quertransport eines Werkstücks 2 von der Aufmerksamkeit einer Bedienungsperson weitestgehend unabhängig ist.

## Patentansprüche

1. Vorrichtung (1) zum Querfördern von langgestreckten und/oder flächigen Werkstücken (2) auf einer Lagerfläche (3) mit wenigstens einer insbesondere endlos umlaufend angetriebenen Schleppkette (4), die zumindest einen nach einer Seite abschwenkbaren und in Gegenrichtung hochstellbaren Mitnehmeranschlag (7), eine Mitnehmerklaue oder dergleichen Vorsprung zum Hintergreifen eines der Förderrichtung abgewandten Bereiches des Werkstückes (2) aufweist, wobei die Schleppkette (4) auch entgegen der Förderrichtung antreibbar und dabei der Mitnehmeranschlag (7) unter die Unterseite des Werkstückes (2) verschwenkbar ist, insbesondere durch sein Anlaufen an dieses Werkstück, **dadurch gekennzeichnet, daß** die Vorrichtung (1) einen Sensor (10) aufweist, der die Auslenkbewegung des Mitnehmeranschlages (7) beim Verschieben entgegen der Förderrichtung unter dem Werkstück (2) hindurch detektiert, und daß der Sensor (10) mit der Steuerung (11) des Antriebes (5) der Schleppkette (4) derart verbunden ist, daß dieser stillsetzbar und/oder in entgegengesetzter Richtung oder in Förderrichtung antreibbar ist.

2. Vorrichtung nach Anspruch 1, **dadurch gekennzeichnet, daß** der oder die Mitnehmeranschläge (7) gegen eine Rückstellkraft oder Rückstellfeder (7) schwenkbar an der Schleppkette (4) gelagert ist/sind und auf der der Schwenkrichtung abgewandten Seite eine Schräge (7a) zum Anlaufen gegen das Werkstück (2) und zum selbsttätigen Niederdrücken beim Unterlaufen des Werkstückes (2) hat/haben.

3. Vorrichtung nach Anspruch 1 oder 2, **dadurch gekennzeichnet, daß** der Sensor (10) wenigstens eine Lichtschranke (12) ist, deren Lichtstrahl (12) insbesondere in Förderrichtung unter dem in Förderposition hochstehenden Mitnehmeranschlag (7) hindurch und in dem Schwenkweg des Mitnehmeranschlages (7) oder eines an diesem vorgesehenen Vorsprunges (7b) bei dessen Verschwenkung nach unten angeordnet ist.

4. Vorrichtung nach Anspruch 1 oder 2, **dadurch gekennzeichnet, daß** der Sensor ein mechanischer Kontakt ist, der durch das Verschwenken des Mitnehmeranschlages (7) oder eines mit diesem verbundenen Vorsprunges (7b) betätigbar ist.

5. Vorrichtung insbesondere nach einem der vorstehenden Ansprüche, **dadurch gekennzeichnet, daß** die Schleppkette (4) mit einer Wegmeßeinrichtung verbunden ist, mit welcher der Weg der Schleppkette (4) und/oder des Mitnehmeranschlages (7) erfaßbar ist, der bis zum Hochschwenken des Mitnehmeranschlages (7) beim Hintergreifen eines Werkstückes (2) zurückgelegt wird.

6. Vorrichtung nach Anspruch 5, **dadurch gekennzeichnet, daß** die Wegmeßeinrichtung oder ihr Wegmesser mit einer Steuerung (11) und/oder mit einem Speicher verbunden sind und somit die jeweilige Position eines Werkstückes (2) vor, während und/oder nach seinem Abtransport erfaßbar und speicherbar ist.
